# EUROPÄISCHE PATENTSCHRIFT

(11) **EP 2 996 002 B1**
(45) Veröffentlichungstag und Bekanntmachung des Hinweises auf die Patenterteilung: **07.02.2018**
(21) Anmeldenummer: 14184335.9
(22) Anmeldetag: 11.09.2014
(51) Int. Cl.: G05B 19/042, H04L 12/24

(54) **Verfahren zur Konfiguration einer drahtlosen Verbindung**
Method of configuring a wirless connection
Procédé de configuration pour une connection sans fil

(43) Veröffentlichungstag der Anmeldung: 16.03.2016
(73) Patentinhaber: Siemens Aktiengesellschaft, 80333 München (DE)
(72) Erfinder: Kugler, Reinhold, 91077 Neunkirchen (DE)

(56) Entgegenhaltungen:
- US-A1- 2006 082 817
- US-A1- 2012 236 769
- US-A1- 2013 072 252

## Beschreibung

Die Erfindung betrifft ein Verfahren zur Konfiguration eines Verdrahtungssystems aus dem Bereich der Automatisierungstechnik. Ferner betrifft die Erfindung ein Computerprogramm und ein Entwicklerwerkzeug, die in der Lage ist, das Konfigurationsverfahren umzusetzen.

Aus DE 10 2007 048 476 A1 ist ein Feldgerät bekannt, das drahtlos über einen HART-Bus mit einer übergeordneten Einheit verbunden ist. Das Feldgerät ist mit einer Kommunikationsschnittstelle und einer entsprechend zugeordneten Funktionseinheit versehen. Dabei ist die Funktionseinheit derart ausgebildet, dass sie getaktet betrieben werden kann. Im getakteten Betrieb wechseln sich Phasen mit aktivierter Funktionseinheit und deaktivierter Funktionseinheit ab. Eine Konfiguration des Feldgeräts erfolgt über einen HART Handheld Communicator, der zunächst ein Aufwecksignal an das Feldgerät sendet. Anschließend werden vom HART Handheld Communicator Konfigurationsbefehle und Konfigurationsdaten als digitale Signale an das Feldgerät gesendet.

Des Weiteren ist eine drahtlose Bus-System-Station bekannt, das unter der Bezeichnung DATAEAGLE von der Firma Schildknecht angeboten wird. Derartige Bus-System-Stationen sind dazu ausgebildet, mittels GPRS, Bluetooth, ZigBee oder WLAN eine Verbindung zu Feldgeräten herzustellen und Daten auszutauschen. Ferner sind WirelessHART-Adapter bekannt, mit denen Feldgeräte verbunden werden können. Dabei können sowohl HART-fähige als auch nicht HART-fähige Feldgeräte an den WirelessHART-Adapter angeschlossen werden. Derartige WirelessHART-Adapter werden beispielsweise von der PHOENIX CONTACT Deutschland GmbH angeboten.

US 2006/082817 A1 (CROSIER DALE C ET AL) 20. April 2006 beschreibt ein Verfahren und ein System zum Konfigurieren einer neuen Vorrichtung. Die Methode beinhaltet die Verwendung eines Host-Systems, um eine Konfigurationsdatei zu erstellen, die Daten enthält, die zum Konfigurieren des neuen Geräts verwendbar sind. Eine tragbare Speichervorrichtung ist mit dem Host verbunden und die Konfigurationsdatei wird auf die Speichervorrichtung übertragen. Das Speichermedium wird dann an das neue Gerät angeschlossen und die Konfigurationsdatei wird auf das neue Gerät übertragen. Die Konfigurationsdatei wird optional verwendet, um das neue Gerät für die Kommunikation über ein Netzwerk zu konfigurieren. Es wird auch ein Verfahren zum Konfigurieren der neuen Vorrichtung unter Verwendung einer direkten Verbindung zwischen dem neuen Gerät und einem Systembus des Hosts offenbart.

US 2013/072252 A1 (CHEN HSI-KUN ET AL) 21. März 2013 beschreibt ein drahtloses Gerät und ein drahtloses Verbindungsverfahren dafür. Das drahtlose Gerät umfasst einen Speicher, eine Verbindungs-Schnittstelle und einen drahtlosen Sende-Empfänger bzw. Transceiver. Der Speicher ist zum Speichern einer drahtlosen Verbindungs-Konfiguration konfiguriert. Die Verbindungs-Schnittstelle ist zum Senden der drahtlosen Verbindungs-Konfiguration zu einem elektrischen Gerät über eine Übertragungsleitung oder eine Speicherkarte konfiguriert. Der drahtlose Sende-Empfänger ist zum automatischen Aufbauen einer drahtlosen Verbindung mit dem elektrischen Gerät konfiguriert, wenn das elektrische Gerät die drahtlose Verbindungs-Konfiguration empfangen und eine drahtlose Verbindungsprozedur gemäß der Verbindungs-Konfiguration ausgeführt hat.

US 2012/236769 A1 (POWELL ROBERT ET AL) 20. September 2012 beschreibt ein Verfahren, welches das kommunikative Koppeln eines Benutzergeräts mit einem Feldgerät in einem industriellen Steuerungssystem umfasst, um das Feldgerät zu konfigurieren und bereitzustellen. Das Verfahren umfasst auch das Auswählen einer Betriebsart des Benutzergeräts. Das Verfahren umfasst ferner als Reaktion auf die Auswahl eines ersten Betriebsmodus das Bereitstellen von Konfigurationsdaten von der Benutzereinrichtung zu dem Feldgerät, um das Feldgerät zu konfigurieren. Zusätzlich umfasst das Verfahren in Reaktion auf das Auswählen eines zweiten Betriebsmodus das Bereitstellen von Daten von der Benutzereinrichtung zu dem Feldgerät, um das Feldgerät auf einem drahtlosen Netzwerk bereitzustellen. Die Bereitstellung der Konfigurationsdaten und der Bereitstellungsdaten könnten die Kommunikation der Bereitstellungsdaten und der Konfigurationsdaten an das Feldgerät über eine Out-of-Band-Kommunikationsschnittstelle umfassen. Die Out-of-Band-Kommunikationsschnittstelle kann eine direkt verdrahtete Schnittstelle oder eine Infrarotschnittstelle umfassen.

Nachteilig an den bekannten drahtlosen Bus-Systemen ist, dass deren Konzipierung und Konfiguration mit einem hohen Aufwand einhergeht. Bei komplexen Anlagen mit einer Vielzahl an Feldgeräten ist die Vergabe und Adressierung von drahtlosen Verbindungen entsprechend aufwendig und fehleranfällig. Ferner ist es bei den bislang bekannten Konfigurationsverfahren nicht möglich, ein Drahtsystem auf automatischem Wege bis auf die Ebene einer einzelnen Drahtverbindung, die sich zwischen zwei Anschlussklemmen erstreckt, zu konfigurieren. Derartige Verdrahtungen erfolgen stattdessen bislang manuell. Der Erfindung liegt die Aufgabe zugrunde, eine Möglichkeit zur Verfügung zu stellen, die eine schnelle und zuverlässige Adressierung und Konfiguration von drahtlos miteinander verbundenen Steuerungskomponenten und Feldkomponenten erlaubt und die Nachteile aus dem Stand der Technik überwindet. Die Aufgabe wird durch das erfindungsgemäße Verfahren und das zugehörige Computerprogramm sowie das entsprechende Entwicklerwerkzeug gelöst.

Das erfindungsgemäße Verfahren dient dazu, eine drahtlose Verbindung zwischen einer Steuerungskomponente und einer ersten Feldkomponente aus der Automatisierungstechnik herzustellen, die einem Verdrahtungssystem zugeordnet sind. Dabei wird in einem ersten Schritt eine Schaltungsinformation bereitgestellt, die als CAD-Information ausgebildet und in der der Aufbau des Verdrahtungssystems abgebildet ist. In einem weiteren Verfahrensschritt wird eine Drahtverbindung zwischen der Steuerungskomponente und der ersten Feldkomponente erfasst. Die Drahtverbindung ist dabei eine Verknüpfung zwischen der Steuerungskomponente und der ersten Feldkomponente, die bei der Konzipierung des Verdrahtungssystems als kabelgebundene Verbindung skizziert ist. Die erfasste Drahtverbindung entspricht dabei der einfachsten möglichen Form einer Verbindung zwischen der Steuerungskomponente und der ersten Feldkomponente, die durch eine drahtlose Verbindung zu ersetzen sind.

In einem weiteren Schritt wird der Steuerungskomponente eine erste Funknetzadresse zugewiesen, die einem ersten Ende der im vorherigen Schritt erfassten Drahtverbindung entspricht. Das erste Ende der Drahtverbindung ist dabei das der Steuerungskomponente zugewandte Ende der Drahtverbindung. Bei einem weiteren Verfahrensschritt wird der ersten Feldkomponente eine zweite Funknetzadresse zugewiesen, die mit einem zweiten Ende der zuvor erfassten Drahtverbindung korrespondiert. Das zweite Ende der Drahtverbindung ist hierbei das Ende der Drahtverbindung, das der ersten Feldkomponente zugewandt ist. Unter den dem ersten und zweiten Ende der Drahtverbindung zugewiesenen Funknetzadressen ist jegliche Form von Adressierung in einem drahtlosen Kommunikationssystem zu verstehen. In einem weiteren Schritt wird eine Verknüpfungsinformation bereitgestellt, die die erste und zweite Funknetzadresse umfasst. Die Verknüpfungsinformation wird in der Steuerungskomponente abgelegt und für den Betrieb des Verdrahtungssystems bereitgehalten.

Ein weiteres, nicht erfindungsgemäßes Verfahren dient dazu, eine drahtlose Verbindung zwischen einer ersten und einer zweiten Feldkomponente herzustellen, die einem Verdrahtungssystem zugeordnet sind. Dabei wird in einem ersten Schritt eine Schaltungsinformation bereitgestellt, in der der Aufbau des Verdrahtungssystems abgebildet ist. In einem weiteren Verfahrensschritt wird eine Drahtverbindung zwischen der ersten Feldkomponente und der zweiten Feldkomponente erfasst.

Die Drahtverbindung ist dabei eine Verknüpfung zwischen der ersten Feldkomponente und der zweiten Feldkomponente, die bei der Konzipierung des Verdrahtungssystems als kabelgebundene Verbindung skizziert ist. Die erfasste Drahtverbindung entspricht dabei der einfachsten möglichen Form einer Verbindung zwischen der Steuerungskomponente und der ersten Feldkomponente, die durch eine drahtlose Verbindung zu ersetzen sind.

In einem weiteren Schritt des nicht erfindungsgemäßen Verfahrens wird der ersten Feldkomponente eine erste Funknetzadresse zugewiesen, die einem ersten Ende der im vorherigen Schritt erfassten Drahtverbindung entspricht. Das erste Ende der Drahtverbindung ist dabei das der ersten Feldkomponente zugewandte Ende der Drahtverbindung. Bei einem weiteren Verfahrensschritt wird der zweiten Feldkomponente eine zweite Funknetzadresse zugewiesen, die mit einem zweiten Ende der zuvor erfassten Drahtverbindung korrespondiert. Das zweite Ende der Drahtverbindung ist hierbei das Ende der Drahtverbindung, das der zweiten Feldkomponente zugewandt ist. Unter den dem ersten und zweiten Ende der Drahtverbindung zugewiesenen Funknetzadressen ist jegliche Form von Adressierung in einem drahtlosen Kommunikationssystem zu verstehen. In einem weiteren Schritt wird eine Verknüpfungsinformation bereitgestellt, die die erste und zweite Funknetzadresse umfasst. Die Verknüpfungsinformation wird in der ersten und/oder zweiten Feldkomponente abgelegt und für den Betrieb des Verdrahtungssystems bereitgehalten.

Das erfindungsgemäße Verfahren erlaubt es, in einfacher Weise, einzelnen Steuerungskomponenten und Feldkomponenten eine Adressierung für eine drahtlose Kommunikation untereinander zuzuweisen, die robust gegen Fehler ist. Dadurch können zuverlässig auch komplexe Netze mit einer Vielzahl an Steuerungskomponenten und Feldkomponenten aufgebaut werden. Dabei greift das erfindungsgemäße Verfahren mit der Schaltungsinformation auf Daten zurück, die ohnehin während einer Konzipierung eines Verdrahtungssystems vorliegen, so dass dessen drahtlose Verbindungen in einem frühen Arbeitsstadium geplant und ausgelegt werden können. Ferner kann das erfindungsgemäße Verfahren in eine Software, die zur Planung des Verdrahtungssystems dient, implementiert werden, so dass die Konfiguration des Verdrahtungssystems weitestgehend selbsttätig und schnell erfolgen kann.

In einer bevorzugten Ausführungsform des erfindungsgemäßen Verfahrens erfolgt das Erfassen der Drahtverbindung anhand eines Typenbezeichners, der in der Schaltungsinformation hinterlegt ist. Der Typenbezeichner kann dabei eine Information darüber sein, welche Aufgaben über die entsprechende angestrebte drahtlose Verbindung erfüllt werden soll. Beispielsweise kann über den Typenbezeichner ein Messdatenkanal identifiziert werden, über den intensiver Datenverkehr erfolgt. Dies kann eine Leitung von einem Sensor mit hoher Abtastrate und umfassenden Datenpaketen sein. Ferner kann über den Typenbezeichner ein Feldgerät identifiziert werden, dass an einer schwer zugänglichen Stelle eingebaut wird, und aufgrund dessen bevorzugt auf drahtlosem Wege konfiguriert wird.

In dem erfindungsgemäßen Verfahren kann die Schaltungsinformation eine CAD-Information und/oder einen elektronischen Schaltplan umfassen. CAD-Informationen und elektronische Schaltpläne sind dazu geeignet, die für das erfindungsgemäße Verfahren erforderlichen Informationen kompakt zu speichern und können bei Änderungen in der Planung des Verdrahtungssystems in einfacher Weise aktualisiert werden. Des Weiteren liegen CAD-Informationen und elektronische Schaltpläne bei der Planung von Verdrahtungssystemen üblicherweise ohnehin vor, so dass das erfindungsgemäße Verfahren in einfacher Weise früh in die Konfiguration des Verdrahtungssystems einbezogen werden kann. Hierdurch können die erfindungsgemäßen Verfahren effizient in bestehende Arbeitsprozesse eingebunden werden.

Vorzugsweise kann bei dem erfindungsgemäßen Verfahren die drahtlose Verbindung als Bluetooth-Verbindung, als ZigBee-Verbindung, als W-LAN-Verbindung, als akustische oder optisehe Verbindung ausgebildet sein. Bluetooth-, W-LAN- und/oder ZigBee-Verbindungen sind robuste und leistungsfähige drahtlose Verbindungen, über die große Datenmengen schnell und zuverlässig transportiert werden können. Darüber hinaus kann das erfindungsgemäße Verfahren auch auf akustische und optische Verbindungen angewandt werden. Die akustische Verbindung kann als Ultraschallverbindung ausgebildet sein; während die optische Verbindung eine Laserverbindung oder eine Infrarot-Verbindung sein kann. Dadurch ist das erfindungsgemäße Verfahren dazu geeignet, mit den drahtlosen Verbindungen Transportwege sowohl für digitale als auch analoge Signale bereitzustellen. Ferner kann die drahtlose Verbindung, die mittels des erfindungsgemäßen Verfahrens hergestellt wird, bidirektional ausgebildet sein.

In einer bevorzugten Ausführungsform der Erfindung liegt zwischen der ersten Feldkomponente und der Steuerungskomponente eine Vielzahl an Drahtverbindungen vor. In einem Verfahrensschritt wird vorzugsweise eine Mehrzahl an Drahtverbindungen erfasst. Ein Ende einer Drahtverbindung an der ersten Feldkomponente und/oder der Steuerkomponente ist dabei als Zugangspunkt ausgebildet. In weiteren Verfahrensschritten wird den jeweiligen ersten und zweiten Enden der Mehrzahl an Drahtverbindungen entsprechend viele Funknetzadressen zugewiesen. In einem anschließenden Verfahrensschritt wird die Mehrzahl an ersten und zweiten Funknetzadressen in der Verknüpfungsinformation zusammengefasst. Vorzugsweise wird die Mehrzahl an Drahtverbindungen derart zusammengefasst, dass einer Mehrzahl an ersten Enden der Drahtverbindungen eine Mehrzahl an ersten Funknetzadressen zugewiesen wird und zusammengefasst in die Verknüpfungsinformation aufgenommen wird. Ferner wird einer Mehrzahl an zweiten Enden der Drahtverbindungen eine Mehrzahl an zweiten Funknetzadressen zugewiesen und zusammengefasst in die gleiche Verknüpfungsinformation aufgenommen wie die Mehrzahl der ersten Funknetzadressen. Die Verknüpfungsinformation, die jeweils eine Mehrzahl an ersten und zweiten Funknetzadressen umfasst, ist dazu ausgebildet, über jeweils eine einzelne Funkeinheit an der ersten Feldkomponente und/oder der Steuerkomponente eine drahtlose Verbindung herzustellen, die eine Vielzahl an Drahtverbindungen ersetzt. Die Funkeinheit der Steuerkomponente und/oder der ersten Feldkomponente fasst damit eine Mehrzahl an Zugangspunkten zusammen. Unter der Funkeinheit ist jegliche Form von Drahtlos-Kommunikationsvorrichtung zu verstehen, die dazu ausgebildet ist, eine der oben beschriebenen Ausführungsformenformen einer drahtlosen Verbindung bereitzustellen.

Bevorzugt ist im erfindungsgemäßen Verfahren die Verknüpfungsinformation derart ausgebildet, dass sie bei einem Hochfahren der Steuerungskomponente und/oder der ersten Feldkomponente ohne weitere Bearbeitung lesbar und ausführbar ist. Dies erlaubt es, eine Startphase des Steuergeräts oder der ersten Feldkomponente zu verkürzen. Eine derartige Startphase kann beispielsweise nach einer Reparatur oder einem softwareseitig erforderlichen Reset eintreten.

Das erfindungsgemäße Verfahren kann derart ausgebildet sein, dass die erste Feldkomponente ein Sensor, ein Aktuator, ein Schaltgerät oder eine Sicherheitsvorrichtung ist. In einer besonders bevorzugten Ausführungsform der Erfindung ist die erste Feldkomponente als Niederspannungsschaltgerät ausgebildet. Niederspannungsschaltgeräte stellen einen Typ an Feldkomponenten dar, deren Verschaltungs-Konfiguration sowie die Verschaltung selbst bislang kleinschrittig, aufwändig und fehleranfällig ist. Durch die erfindungsgemäßen Verfahren wird eine Möglichkeit zur Verfügung gestellt, Niederspannungsschaltgeräte für eine drahtlose Verbindung mit einer Steuerkomponente oder untereinander selbsttätig, schnell und zuverlässig zu konfigurieren und logisch miteinander zu verschalten. Das erfindungsgemäße Verfahren ist für eine breite Spanne an möglichen Steuerung- und Feldkomponenten ausgelegt und kann damit für zahlreiche Einsatzwecke verwendet werden. Des Weiteren können die oben beschriebenen Schritte des erfindungsgemäßen Verfahrens für jede einzelne Feldkomponente im Verdrahtungssystem separat durchgeführt werden. Eine derartige Wiederholung des erfindungsgemäßen Verfahrens erlaubt es, schnell eine Vielzahl an Feldkomponenten zu konfigurieren.

Das erfindungsgemäße Programm ist auf einem Speichermedium gespeichert und dazu ausgebildet, das oben beschriebene erfindungsgemäße Verfahren umzusetzen. Das erfindungsgemäße Programm ist vorzugsweise dazu ausgebildet, in einem Speicher eines Computers in Verbindung mit einer CAD-Software ausgeführt zu werden. Hierdurch wird eine einfache und zuverlässige Integration in vorhandene technische Hilfsmittel erzielt, die bei der Konzipierung und Planung eines Verdrahtungssystems eingesetzt werden. Das erfindungsgemäße Programm kann somit in effizienter Weise in vorhandene Arbeitsprozesse integriert werden.

Das erfindungsgemäße Entwicklerwerkzeug, das insbesondere als Computer ausgebildet sein kann, umfasst eine Eingangsschnittstelle, die zur Erfassung einer Schaltungsinformation eines Verdrahtungssystems ausgebildet ist. Das Entwicklerwerkzeug weist auch eine Ausgangsschnittstelle auf, die zur Ausgabe einer Verknüpfungsinformation an eine Steuerungskomponente und/oder eine Feldkomponente des Verdrahtungssystems dient und ist mit einem Speicher und einer Recheneinheit versehen. Das erfindungsgemäße Entwicklerwerkzeug ist dazu ausgebildet, über seine einzelnen Komponenten das erfindungsgemäße Verfahren umzusetzen. Vorzugsweise ist dabei die Recheneinheit als Mikrocontroller und der Speicher als Firmware einer Steuerungskomponente und/oder einer Feldkomponente ausgebildet.

Ein derartiges Entwicklerwerkzeug kann in einfacher Weise mit existierenden CAD-Daten und Informationen aus einem elektronischen Schaltplan gespeist werden, und so in einem frühen Arbeitsstadium bei der Konzipierung des Verdrahtungssystems drahtlose Verbindungen konfigurieren. Das erfindungsgemäße Entwicklerwerkzeug erlaubt es, das erfindungsgemäße Verfahren in einfacher Weise in bestehende Arbeitsprozesse einzubeziehen und steigert dadurch die Effizienz bei der Anwendung des Verfahrens.

Der Gegenstand der Erfindung wird im Folgenden anhand von in den Figuren 1 bis 3 dargestellten Ausführungsformen näher erläutert. Es zeigen:
- FIG 1: einen Aufbau eines Verdrahtungssystems in Form einer Schaltungsinformation, das als Ausgangspunkt des erfindungsgemäßen Verfahrens dient;
- FIG 2: einen Aufbau eines Verdrahtungssystems in Form einer Schaltungsinformation nach Durchlaufen des erfindungsgemäßen Verfahrens;
- FIG 3: ein Ablaufdiagramm des erfindungsgemäßen Verfahrens.

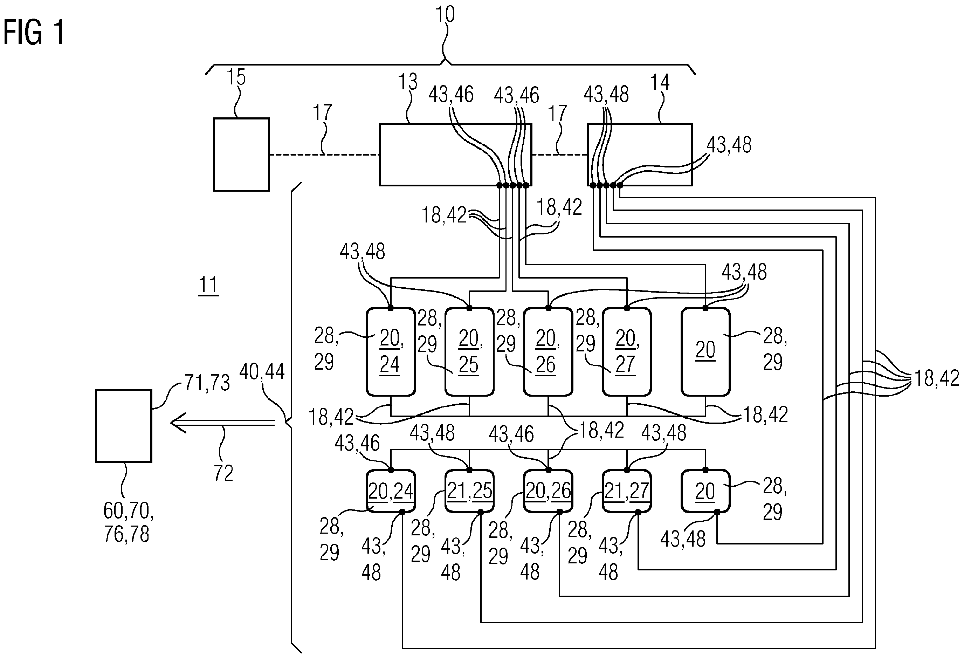

FIG 1 zeigt schematisch einen Aufbau eines Verdrahtungssystems 11, wie es in Form einer Schaltungsinformation 40 abgebildet wird. Die Schaltungsinformation 40 liegt dabei als CAD-Information 44 vor. Aus FIG 1 geht dabei die Ausgangslage hervor, auf dessen Basis das nicht dargestellte erfindungsgemäße Verfahren 100 startet. Das Verdrahtungssystem 11 umfasst eine Steuerungskomponente 10, die eine Eingangseinheit 13, eine Ausgangseinheit 14 und eine Recheneinheit 15 aufweist. Die Eingangseinheit 13, die Ausgangseinheit 14 und die Recheneinheit 15 sind über interne Verbindungen 17 miteinander verbunden und wirken nach außen als die zusammenhängende Steuerungskomponente 10. Des Weiteren umfasst das Verdrahtungssystem 11 eine Vielzahl an ersten Feldkomponenten 20 und zweiten Feldkomponenten 21. Die ersten Feldkomponenten 20 übernehmen unterschiedliche Funktionen und sind dementsprechend unterschiedlich ausgebildet. Das in FIG 1 abgebildete Verdrahtungssystem 11 umfasst als erste Feldkomponenten 20 Sensoren 24, einen Aktuator 25, Schaltgeräte 26 und eine Sicherheitsvorrichtung 27. Jede der ersten Feldkomponenten 20 weist einen Mikrocontroller 28 auf, der jeweils als Recheneinheit dient. Ebenso ist jeder der ersten Feldkomponenten mit einem Speicher 29 ausgestattet, der mit dem entsprechenden Mikrocontroller 28 zusammenwirkt um Signale von der jeweiligen ersten Feldkomponente 20 zu erfassen und an die Steuerungskomponente 10 zu senden oder von der Steuerungskomponente 10 empfangene Signale zu verarbeiten.

Das Verdrahtungssystem 11 umfasst auch zweite Feldkomponenten 21, die im Wesentlichen baugleich mit den ersten Feldkomponenten 20 ausgebildet sind. Die zweiten Feldkomponenten 21 erfüllen im Verdrahtungssystem 11 unterschiedliche Funktionen und sind entsprechend ausgebildet. Eine zweite Feldkomponente 21 ist ein Aktuator 25, während eine weitere zweite Feldkomponente 21 als Sicherungsvorrichtung 27 ausgebildet ist. Die zweiten Feldkomponenten 21 weisen jeweils einen Speicher 28 und einen zugehörigen Mikrocontroller 27 auf, der als Recheneinheit dient.

Das Verdrahtungssystem 11 weist eine Vielzahl an Drahtverbindungen 42 auf, die von der Eingangseinheit 13 oder der Ausgangseinheit 14 ausgehend eine Verbindung zu den ersten Feldkomponenten 20 und den zweiten Feldkomponenten 21 herstellen. Die Drahtverbindungen 42 sind dabei logische Verknüpfungen, die innerhalb der Schaltungsinformation 40 vorliegen und einen funktionalen Zusammenhang zwischen den verbundenen ersten und zweiten Feldkomponenten 20, 21 mit der Steuerungskomponente definieren. Jede der Drahtverbindungen 42 ist mit einem Typenbezeichner 18 versehen, der Informationen über die jeweilige Drahtverbindung 42 beinhaltet. Die im Typenbezeichner 18 hinterlegte Information beschreibt unter anderem, in welcher Ausgestaltung die jeweilige Drahtverbindung 42 beim Bau des Verdrahtungssystems hergestellt werden soll. Der Typenbezeichner 18 enthält ebenso Information über darüber, zu welchen Zwecken die jeweilige Drahtverbindung 42 dient. Der Typenbezeichner 18 identifiziert in den nicht näher dargestellten erfindungsgemäßen Verfahren 100 damit, ob eine Drahtverbindung 42 durch eine in FIG 1 auch nicht dargestellte drahtlose Verbindung 30 zu ersetzen ist. Des Weiteren sind im Verdrahtungssystem 11 Drahtverbindungen 42 ausgebildet, die erste oder zweite Feldkomponenten 20, 21 miteinander verbinden. Auch die Drahtverbindungen 42 zwischen den ersten oder zweiten Feldkomponenten 20, 21 sind jeweils mit einem Typenbezeichner 18 versehen.

In FIG 1 sind sowohl an der Eingangseinheit 13 als auch an der Ausgangseinheit 14 der Steuerungskomponente 10 Zugangspunkte 43 ausgebildet, die jeweils mit einer Drahtverbindung 42 gekoppelt sind. Der Zugangspunkt 43 ist hierbei ein Kanal, über den mittels der jeweiligen Drahtverbindung 42 eine Information aus einem Signal in der entsprechenden Drahtverbindung 42 der Steuerungskomponente 10 zugeführt wird. Am Zugangspunkt 43 liegt jeweils das erste Ende 46 der Drahtverbindungen 42, das im nicht näher dargestellten Verfahren 100, identifiziert und mit einer in FIG 1 nicht abgebildeten ersten Funknetzadresse 12 versehen wird. Am entgegengesetzten zweiten Ende 48 der jeweiligen Drahtverbindung 42 wird eine Kopplung mit jeweils einer ersten oder zweiten Feldkomponente 20, 21 hergestellt. Das zweite Ende 48 einer Drahtverbindung 42 wird in dem beanspruchten Verfahren Das erste Ende 46 und das korrespondierende zweite Ende 48 einer Drahtverbindung 42 werden von der in dem erfindungsgemäßen Verfahren 100 erzeugten Verknüpfungsinformationen 50 umfasst.

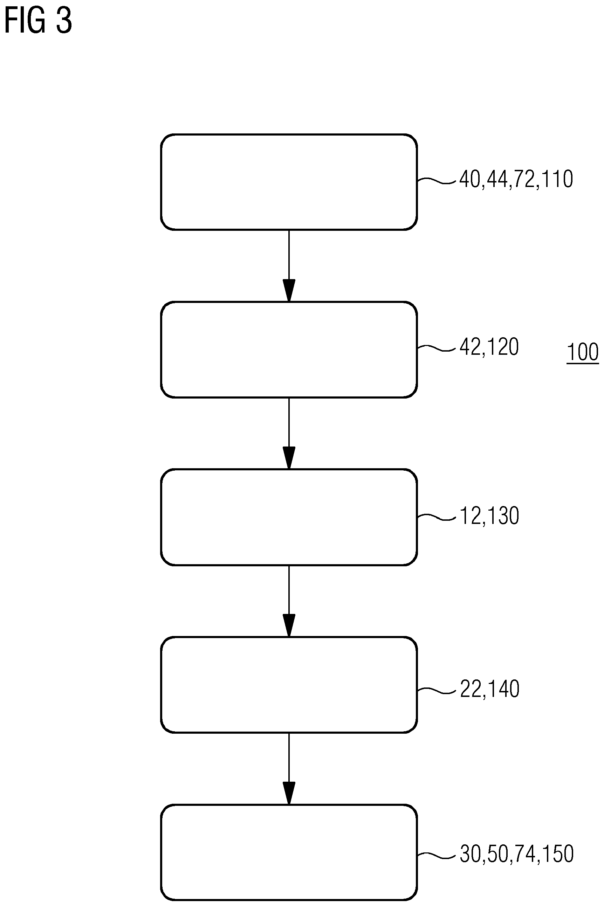

Das als Schaltungsinformation 40 abgebildete Verdrahtungssystem 11 gemäß FIG 1 wird in einem ersten Verfahrensschritt 110 nach FIG 3 im Zuge eines Datenzugriffs von einem Entwicklerwerkzeug 70 erfasst. Die Erfassung 72 leitet die Information an die Eingangsschnittstelle 71 des Entwicklerwerkzeugs 70. Das Entwicklerwerkzeug 70 ist ferner mit einer Ausgangsschnittstelle 73 zur Ausgabe 74 von Informationen versehen. Des Weiteren weist das Entwicklerwerkzeug 70 einen Speicher 76 und eine Recheneinheit 78 auf, die dazu ausgebildet sind, ein Programm 60 zu speichern und auszuführen, das das erfindungsgemäße Verfahren 100 umsetzt.

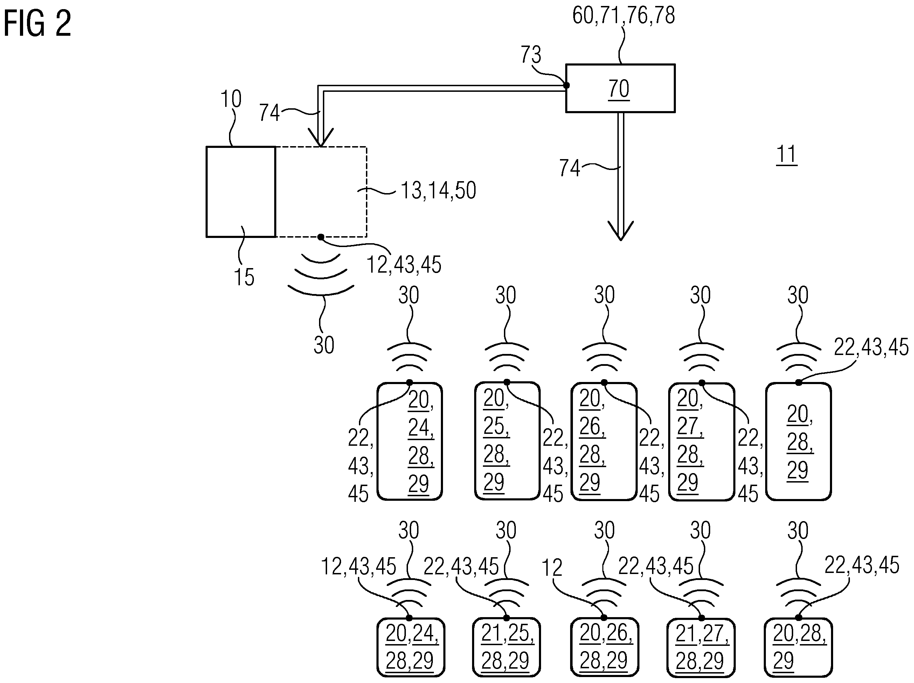

In FIG 2 ist das Verdrahtungssystem 11 gemäß FIG 1 nach Ablauf des erfindungsgemäßen Verfahrens 100 abgebildet. Das Verdrahtungssystem 11 umfasst die Steuerungskomponente 10 mit einer Recheneinheit 15, eine Eingangseinheit 13 und eine Ausgangseinheit 14. Die Funktionen der Eingangseinheit 13 und der Ausgangseinheit 14 werden am Ende des erfindungsgemäßen Verfahrens 100 in FIG 3 drahtlos erfüllt. In der Steuerungskomponente 10 sind Verknüpfungsinformationen 50 gespeichert, die erste und zweite Funknetzadressen 12, 22 umfassen. Zwischen der Steuerungskomponente 10 und den ersten Feldkomponenten 20 sind drahtlose Verbindungen 30 ausgebildet, über die Messdaten, Steuerungsbefehle und Fehlermeldungen zwischen den ersten Feldkomponenten 20 und der Steuerungskomponente 10 ausgetauscht werden. Die ersten Feldkomponenten 20 sind je nach ihrer Funktion unterschiedlich ausgebildet und sind entsprechend Sensoren 24, Aktuatoren, 25, Schaltgeräte 26 oder Sicherheitsvorrichtungen 27. Jede der ersten Feldkomponenten 20 ist mit einem Mikrocontroller 28 und einem Speicher 27 versehen, die auch dazu geeignet sind, eine Verknüpfungsinformation 50 zu speichern. Den ersten Feldkomponenten 20 ist jeweils eine erste Funknetzadresse 12 oder eine zweite Funknetzadresse 22 zugewiesen. Eine erste Feldkomponente 20 mit einer zweiten Funknetzadresse 22 ist über eine Verknüpfungsinformation 50 mit einer ersten Funknetzadresse 12 der Steuerungskomponente 10 gekoppelt. Die Zuordnung einer ersten und einer zweiten Funknetzadresse 12, 22 definiert eine drahtlose Verbindung 30 zwischen einem Zugangspunkt 43 der Steuerungskomponente 10 und einer ersten Feldkomponente 20. Die Steuerungskomponente 10 und die ersten und zweiten Feldkomponenten 20, 21 sind jeweils mit einer Funkeinheit 45 ausgestattet, über die der Datenverkehr der jeweiligen drahtlosen Verbindung 30 abgewickelt wird. Derartige drahtlose Verbindungen 30 werden über das erfindungsgemäße Verfahren 100 konfiguriert und hergestellt.

Ferner werden erste Feldkomponenten 20 mit einer ersten Funknetzadresse 12 über eine Verknüpfungsinformation 50 einer zweiten Feldkomponente 21 mit einer zweiten Funknetzadresse 22 gekoppelt. Hierdurch wird eine drahtlose Verbindung 30 zwischen einer einem Zugangspunkt 43 einer ersten Feldkomponente 20 und einem Zugangspunkt 43 einer zweiten Feldkomponente 21 definiert. Derartige drahtlose Verbindungen 30 werden im Zuge des nicht erfindungsgemäßen Verfahrens konfiguriert und hergestellt.

Die ersten und zweiten Feldkomponenten 20, 21 sind im Wesentlichen baugleich und weisen jeweils einen Mikrocontroller 28 und einen Speicher 29 auf, die dazu geeignet sind, die entsprechenden Verknüpfungsinformationen 50 zu erfassen und zu speichern. Dabei sind die Verknüpfungsinformationen 50 in den Speichern 29 der ersten und zweiten Feldkomponenten 20, 21 derart gespeichert, dass die Verknüpfungsinformationen 50 beim Hochfahren der ersten und zweiten Feldkomponenten 20, 21 ohne weitere Verarbeitung ausgelesen und genutzt werden können. Die Verknüpfungsinformationen 50 werden der Steuerungskomponente 10 und den ersten und zweiten Feldkomponenten 20, 21 vom Entwicklerwerkzeug 70 zugewiesen. Das Entwicklerwerkzeug 70 verfügt neben der Eingangsschnittstelle 71 über die Ausgangsschnittstelle 73, über die eine Ausgabe 74 der Verknüpfungsinformationen 50 erfolgt. Das Entwicklerwerkzeug ist mit einem Speicher 76 und einer Recheneinheit 78 ausgestattet, die es ermöglichen, ein Programm 60 auszuführen, das das erfindungsgemäße Verfahren 100 umsetzt.

In FIG 3 ist schematisch der Ablauf des erfindungsgemäßen Verfahrens 100 abgebildet. In einem ersten Schritt 110 erfolgt das Bereitstellen der Schaltungsinformation 40, die als CAD-Information 44 ausgebildet ist. Dabei erfolgt der in FIG 1 dargestellte Datenzugriff 72, in dem die Schaltungsinformation durch das nicht näher dargestellte Entwicklerwerkzeug 70 eingelesen wird. In einem zweiten Schritt 120 wird in der bereitgestellten Schaltungsinformation 40 die Drahtverbindung 42 erfasst, die zwischen der nicht abgebildeten ersten Feldkomponente 20 und der nicht dargestellten Steuerungskomponente 10 vorliegt und durch eine drahtlose Verbindung 30 zu ersetzen ist. In einem anschließenden dritten Schritt 130 wird dem ersten Ende 46 der im vorherigen Schritt erfassten Drahtverbindung 42 eine erste Funknetzadresse 12 zugewiesen. In analoger Weise wird im vierten Schritt 140 dem zweiten Ende 48 der im zweiten Schritt 120 erfassten Drahtverbindung 42 eine zweite Funknetzadresse 22 zugewiesen. Danach wird im fünften Schritt 150 eine Verknüpfungsinformation 50 bereitgestellt, die die erste und zweite Funknetzadresse 12, 22 umfasst und durch eine Ausgabe 74 an die nicht dargestellte Steuerungskomponente 10 weitergeleitet. Die Ausgabe 74 definiert dadurch die drahtlose Verbindung 30 zwischen der ersten Feldkomponente 20 und der Steuerungskomponente 10. Hierdurch wird das erfindungsgemäße Verfahren 100 verwirklicht.

Beim nicht erfindungsgemäßen Verfahren 100 wird im zweiten Schritt 120 die Drahtverbindung 42 zwischen der ersten und zweiten Feldkomponente 20, 21 erfasst, die durch eine drahtlose Verbindung 30 zu ersetzen ist. Analog zum erfindungsgemäßen Verfahren 100 werden im dritten und vierten Schritt 130, 140 den nicht dargestellten ersten und zweiten Enden 46, 48 der Drahtverbindung 42 jeweils eine erste und zweite Funknetzadresse 12, 22 zugewiesen. Durch Zusammenfügen der ersten und zweiten Funknetzadresse 12, 22 in einer Verknüpfungsinformation 50 im fünften Schritt 150 wird das nicht erfindungsgemäße Verfahren verwirklicht.

## Patentansprüche

1. Verfahren (100) zur Konfiguration einer drahtlosen Verbindung (30) zwischen einer Steuerungskomponente (10) und einer ersten Feldkomponente (20) aus der Automatisierungstechnik, umfassend die Schritte:
a) Bereitstellen einer Schaltungsinformation (40) eines Verdrahtungssystems (11), die als CAD-Information (44) ausgebildet ist, und den Aufbau des Verdrahtungssystems (11) abbildet,
b) Erfassen einer Drahtverbindung (42) zwischen der Steuerungskomponente (10) und der ersten Feldkomponente (20),
c) Zuweisen einer ersten Funknetzadresse (12) zur Steuerungskomponente (10), wobei die erste Funknetzadresse (12) mit einem ersten Ende (46) der Drahtverbindung (42) korrespondiert,
d) Zuweisen einer zweiten Funknetzadresse (22) zur ersten Feldkomponente (20), wobei die zweite Funknetzadresse (22) mit einem zweiten Ende (48) der Drahtverbindung (42) korrespondiert,
e) Bereitstellen einer Verknüpfungsinformation (50), umfassend die erste und zweite Funknetzadresse (12, 22), in der Steuerungskomponente (10).

2. Verfahren (100) nach Anspruch 1, **dadurch gekennzeichnet, dass** das Erfassen der Drahtverbindung (42) anhand eines in der Schaltungsinformation (40) hinterlegten Typenbezeichners (18) erfolgt.

3. Verfahren (100) nach einem der Ansprüche 1 oder 2, **dadurch gekennzeichnet, dass** die drahtlose Verbindung (30) als Bluetooth-Verbindung, als ZigBee-Verbindung, als WLAN-Verbindung, als akustische Verbindung oder optische Verbindung ausgebildet ist.

4. Verfahren (100) nach einem der Ansprüche 1 bis 3, **dadurch gekennzeichnet, dass** die drahtlose Verbindung (30) bidirektional ausgebildet ist.

5. Verfahren (100) nach einem der Ansprüche 1 bis 4, **dadurch gekennzeichnet, dass** im Schritt b) eine Mehrzahl an Drahtverbindungen (42) erfasst wird und in den Schritten c) und d) jeweils eine Mehrzahl an ersten und zweiten Funknetzadressen (12, 22) zugewiesen wird, und im Schritt e) die Mehrzahl an ersten und zweiten Funknetzadressen (12, 22) in der Verknüpfungsinformation (50) bereitgestellt wird.

6. Verfahren (100) nach Anspruch 5, **dadurch gekennzeichnet, dass** die Verknüpfungsinformation (50) zum Betrieb einer Funkeinheit (45) in der ersten Feldkomponente (20)und/oder der Steuerkomponente (10) bereitgestellt wird.

7. Verfahren (100) nach einem der Ansprüche 1 bis 6, **dadurch gekennzeichnet, dass** die erste Feldkomponente (20) als Sensor (24), Aktuator (25), Schaltgerät (26), oder Sicherheitsvorrichtung (27) ausgebildet ist.

8. Verfahren (100) nach einem der Ansprüche 1 bis 7, **dadurch gekennzeichnet, dass** die Schritte a) bis e) jeweils einmal für jede Feldkomponente (20, 21) im Verdrahtungssystem (11) durchgeführt werden.

9. Programm (60), das auf einem Speichermedium gespeichert ist und zur Durchführung eines Verfahrens nach einem der Ansprüche 1 bis 8 ausgebildet ist.

10. Entwicklungswerkzeug (70), umfassend eine Eingangsschnittstelle (71) zur Erfassung (72) einer Schaltungsinformation (40) eines Verdrahtungssystems (11), eine Ausgangsschnittstelle (73) zur Ausgabe (74) einer Verknüpfungsinformation (50) an eine Steuerungskomponente (10) und/oder Feldkomponente (20, 21) des Verdrahtungssystems (11), einen Speicher (76) und eine Recheneinheit (78) die zur Durchführung eines Verfahrens nach einem der Ansprüche 1 bis 8 eingerichtet ist.

## Claims

1. Method (100) for configuring a wireless connection (30) between a control component (10) and a first field component (20) from automation technology, comprising the steps:
a) provision of circuit information (40) for a wiring system (11) which is designed as CAD information (44) and maps the structure of the wiring system (11),
b) capture of a wired connection (42) between the control component (10) and the first field component (20),
c) assignment of a first radio network address (12) to the control component (10), wherein the first radio network address (12) corresponds to a first end (46) of the wired connection (42),
d) assignment of a second radio network address (22) to the first field component (20), wherein the second radio network address (22) corresponds to a second end (48) of the wired connection (42),
e) provision of linkage information (50), comprising the first and second radio network address (12, 22), in the control component (10).

2. Method (100) according to claim 1, **characterised in that** the capture of the wired connection (42) takes place on the basis of a type identifier (18) stored in the circuit information (40).

3. Method (100) according to one of claims 1 or 2, **characterised in that** the wireless connection (30) is designed as a Bluetooth connection, as a ZigBee connection, as a WLAN connection, as an acoustic connection or as an optical connection.

4. Method (100) according to one of claims 1 to 3, **characterised in that** the wireless connection (30) is designed to be bidirectional.

5. Method (100) according to claims 1 to 4, **characterised in that** in step b) a plurality of wired connections (42) is captured and in steps c) and d) a plurality of first and second radio network addresses (12, 22) is assigned in each case, and in step e) the plurality of first and second radio network addresses (12, 22) is provided in the linkage information (50).

6. Method (100) according to claim 5, **characterised in that** the linkage information (50) is provided for operating a radio unit (45) in the first field component (20) and/or the control component (10).

7. Method (100) according to one of claims 1 to 6, **characterised in that** the first field component (20) is designed as a sensor (24), actuator (25), switchgear (26) or safety device (27).

8. Method (100) according to one of claims 1 to 7, **characterised in that** the steps a) to e) are each performed once for each field component (20, 21) in the wiring system (11) .

9. Program (60) which is stored on a storage medium and is designed to perform a method according to one of claims 1 to 8.

10. Development tool (70), comprising an input interface (71) for capturing (72) circuit information (40) for a wiring system (11), an output interface (73) for the output (74) of linkage information (50) to a control component (10) and/or field component (20, 21) of the wiring system (11), a memory (76) and a computing unit (78) that is designed to perform a method according to one of claims 1 to 8.

## Revendications

1. Procédé (100) de configuration d'une liaison (30) sans fil entre un composant (10) de commande et un premier composant (20) sur site de la technique d'automatisation, comprenant les stades :
a) mise à disposition d'une information (40) de circuit d'un système (11) de câblage, qui est constituée sous la forme d'une information CAD (44) et qui reproduit la structure du système (11) de câblage,
b) détection d'une liaison (42) filaire entre le composant (10) de commande et le premier composant (20) sur site,
c) affectation d'une première adresse (12) de réseau radio au composant (10) de commande, la première adresse (12) de réseau radio correspondant à une première extrémité (46) de la liaison (42) filaire,
d) affectation d'une deuxième adresse (22) de réseau radio au premier composant (20) sur site, la deuxième adresse (22) de réseau radio correspondant à une deuxième extrémité (48) de la liaison (42) filaire,
e) mise à disposition d'une information (50) de combinaison, comprenant la première et la deuxième adresse (12, 22) de réseau radio dans le composant (10) de commande.

2. Procédé (100) suivant la revendication 1, **caractérisé en ce que** la détection de la liaison (42) filaire s'effectue à l'aide d'un identificateur (18) de type mémorisé dans l'information (40) de circuit.

3. Procédé (100) suivant l'une des revendications 1 ou 2, **caractérisé en ce que** la liaison (30) sans fil est constituée sous la forme d'une liaison Bluetooth, d'une liaison Zigbee, d'une liaison WLAN, d'une liaison acoustique ou d'une liaison optique.

4. Procédé (100) suivant l'une des revendications 1 à 3, **caractérisé en ce que** la liaison (30) sans fil est bidirectionnelle.

5. Procédé (100) suivant l'une des revendications 1 à 4, **caractérisé en ce qu'**au stade b), on détecte une pluralité de liaisons (42) filaires et aux stades c) et d), on affecte respectivement une pluralité de première et de deuxième adresses (12, 22) de réseau radio et au stade e), on met à disposition la pluralité de première et deuxième adresses (12, 22) de réseau radio dans l'information (50) de combinaison.

6. Procédé (100) suivant la revendication 5, **caractérisé en ce que** l'on met à disposition l'information (50) de combinaison pour faire fonctionner une unité (45) radio dans le premier composant (20) sur site et/ou le composant (10) de commande.

7. Procédé (100) suivant l'une des revendications 1 à 6, **caractérisé en ce que** le premier composant (20) sur site est constitué en capteur (24), en actionneur (25), en appareil (26) de commutation ou en dispositif (27) de sécurité.

8. Procédé (100) suivant l'une des revendications 1 à 7, **caractérisé en ce que** l'on effectue a) à e), chacun une fois pour chaque composant (20, 21) sur site du système (11) de câblage.

9. Programme (60), qui est mémorisé sur un support de mémoire et qui est constitué pour effectuer un procédé suivant l'une des revendications 1 à 8.

10. Outil (70) de développement, comprenant une interface (71) d'entrée pour détecter (72) une information (40) de circuit d'un système (11) de câblage, une interface (73) de sortie (74) pour sortir une information (50) de combinaison sur un composant (10) de commande et/ou un composant (20,21) sur site du système (11) de câblage, une mémoire (76) et une unité (78) informatique conçue pour effectuer un procédé suivant l'une des revendications 1 à 8.
